(19) Europäisches Patentamt
European Patent Office
Office européen des brevets

(11) Numéro de publication: **0 526 305 B1**

# (12) FASCICULE DE BREVET EUROPEEN

(45) Date de publication du fascicule du brevet: **22.11.95**

(51) Int. Cl.[6]: **A62D 3/00**, A62D 1/00, B01D 19/04

(21) Numéro de dépôt: **92402096.9**

(22) Date de dépôt: **21.07.92**

## (54) Mousse de décontamination à durée de vie contrôlée.

(30) Priorité: **23.07.91 FR 9109286**

(43) Date de publication de la demande:
**03.02.93 Bulletin 93/05**

(45) Mention de la délivrance du brevet:
**22.11.95 Bulletin 95/47**

(84) Etats contractants désignés:
**BE CH DE ES FR GB IT LI SE**

(56) Documents cités:
**EP-A- 95 045**
**WO-A-91/04313**
**SU-A- 1 167 676**
**ZA-A- 8 404 346**
**EP-A- 0 120 092**
**DE-A- 2 540 873**
**US-A- 4 442 018**

(73) Titulaire: **COMMISSARIAT A L'ENERGIE ATOMIOUE**
**31-33, rue de la Fédération**
**F-75015 Paris (FR)**

(72) Inventeur: **Gauchon, Jean-Paul**
**66 rue des Sources**
**F-84120 Pertuis (FR)**
Inventeur: **Brunel Guy**
**8 rue Barry**
**F-84360 Lauris (FR)**
Inventeur: **Costes, Jean-Raymond**
**Les Aspres**
**F-26790 Rochegude (FR)**
Inventeur: **Faucompre, Bernard**
**Résidence Jardin des Fontaines**
**F-34000 Montpellier (FR)**

(74) Mandataire: **Des Termes, Monique et al**
**Société Brevatome**
**25, rue de Ponthieu**
**F-75008 Paris (FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

La présente invention a pour objet une mousse de décontamination à durée de vie contrôlée, utilisable en particulier pour décontaminer

la surface d'objets, notamment d'objets relativement grands et de forme complexe, plus particulièrement des volumes creux.

La décontamination chimique ou radioactive de la surface d'objets est généralement effectuée au moyen de procédés chimiques par voie humide utilisant des solutions contenant des réactifs de décontamination et ayant généralement un pouvoir décapant.

Les techniques de décontamination utilisées avec ces solutions peuvent consister en un lavage, une aspersion ou un trempage, mais lorsque les pièces à décontaminer ont de grandes dimensions, ces techniques sont inadaptées car elles ont l'inconvénient de nécessiter de grands volumes de réactifs et par voie de conséquence d'entraîner la formation de quantités très importantes d'effluents actifs liquides.

Pour décontaminer de tels objets en utilisant des volumes moindres de réactif, on peut utiliser des mousses renfermant les solutions de décontamination.

Ainsi, une mousse de décontamination est une microdispersion ou une émulsion gaz-liquide constituée :

- d'une phase liquide constituant le milieu de dispersion, qui renferme le(s) réactif(s) de décontamination et le(s) additif(s) nécessaire(s) pour former la mousse, et
- d'une phase gazeuse constituant la phase dispersée, qui est généralement formée d'air, d'azote ou d'un gaz neutre.

Dans une telle mousse, le volume de la phase liquide peut être faible car la mousse contient généralement 5 à 50 fois plus de gaz que de liquide. En conséquence, les effluents actifs liquides provenant de l'installation de décontamination sont sensiblement réduits.

Lorsqu'on utilise une mousse de décontamination, il convient d'appliquer la mousse sur la surface de l'objet, d'éliminer ensuite celle-ci de la surface de l'objet puis de la détruire afin de séparer la phase liquide de la phase gazeuse et de recycler cette phase liquide dans une nouvelle mousse utilisable pour poursuivre l'opération de décontamination.

Jusqu'à présent, les mousses utilisées pour réaliser de telles décontaminations avaient une durée de vie élevée, c'est-à-dire supérieure à 30min, si bien qu'il était nécessaire d'effectuer plusieurs rinçages à l'eau de la surface de l'objet pour éliminer la mousse avant de pouvoir appliquer sur celui-ci une nouvelle couche de mousse, comme il est décrit par J.M. Harris et al. International Joint Topical Meeting ANS - CNA, September 19-22, 1982, Sheraton Brock Hotel, Niagara Falls, Canada.

La mousse ainsi récupérée peut être détruite lors du rinçage lorsqu'on ajoute à l'eau de rinçage un produit approprié, comme il est indiqué par Harris et al. On peut aussi la détruire mécaniquement, comme il est décrit par P. Boutot et al dans le rapport CEA R-3661 de 1969, mais ceci complique et alourdit encore l'installation de décontamination.

La présente invention a précisément pour objet une mousse de décontamination dont on peut contrôler la durée de vie de façon à ce qu'elle soit détruite au bout d'un laps de temps raisonnable en formant un film liquide sur la surface de l'objet à décontaminer.

Selon l'invention, la mousse de décontamination comprend

a) une phase liquide constituée par une solution d'au moins deux agents tensioactifs non ioniques et/ou amphotères , constitués respectivement par une bétaïne et par un éther alkylique d'oligosaccharide, d'au moins un agent de déstabilisation d'une émulsion gaz-liquide constitué par un alcool ayant un point d'ébullition légèrement supérieur à celui de l'eau et d'au moins un réactif de décontamination constitué par un acide ou une base inorganique ou organique, et

b) une phase gazeuse dispersée dans la phase liquide.

Dans cette mousse, la présence dans la phase liquide d'un agent de déstabilisation d'une émulsion gaz-liquide, permet de contrôler la durée de vie de la mousse de telle façon, qu'en fonction du taux d'humidité, la coalescence de la mousse sur la surface à traiter soit suffisamment élevée et constante pour permettre à une quantité adéquate de réactif(s) chimique(s) de décontamination sous forme de film de jouer leur rôle décontaminant de façon continue et efficace.

La durée de vie d'une mousse peut être définie comme le temps nécessaire à la transformation totale d'un volume donné de mousse en liquide.

La coalescence d'une mousse c'est-à-dire la dégradation de celle-ci avec diminution du nombre de bulles, correspond à la transformation d'une mousse en liquide au contact d'une paroi ou d'un solide.

La décantation directe du liquide à travers l'interface séparant les bulles de gaz de la mousse, soit l'éjection spontanée du liquide sans diminution du nombre de bulles, est appelée le drainage, et c'est la

diminution de la surface totale des interfaces entre les bulles qui conduit au phénomène de coalescence et de drainage.

Le pourcentage d'humidité (TH) d'une mousse peut être défini par le rapport suivant :

$$TH(\%) = \frac{\text{volume de phase liquide}}{\text{volume de mousse}} \times 100$$

Pour être adaptée à la décontamination, une mousse doit être suffisamment humide pour permettre la coalescence d'une quantité adéquate de mousse, de telle façon que la surface à décontaminer soit continuellement au contact d'un film liquide qui se renouvelle constamment.

Dans la composition de mousse de l'invention, les constituants de la phase liquide, en particulier l'agent de déstabilisation d'une émulsion gaz-liquide, et leurs quantités sont choisis de façon à obtenir une durée de vie de la mousse de 15 à 30min, et un taux d'humidité de 2 à 20%.

L'agent de déstabilisation est un composé organique qui déstabilise la mousse en agissant sur la tension superficielle dynamique, soit un alcool ayant un point d'ébullition legèrement supérieur à celui de l'eau, par exemple un point d'ébullition de 110°C à 130°C.

De préférence, dans l'invention, on utilise un alcool secondaire en $C_5$ ou $C_6$ comme le pentanol-2 et le méthyl-4 pentanol-2.

Généralement, la quantité d'agent de déstabilisation représente de 0,2 à 1% en poids.

Dans la phase liquide de la mousse de l'invention, le(s) réactif(s) de décontamination sont constitués par les réactifs habituellement utilisés dans les procédés de décontamination par voie humide.

Lorsque les objets à décontaminer sont métalliques, on utilise en particulier des réactifs constitués par des acides ou des bases inorganiques ou organiques.

A titre de réactifs acides, on peut citer l'acide chlorhydrique, l'acide nitrique, l'acide sulfurique et l'acide phosphorique qui peuvent être employés seuls ou en combinaison. On peut également utiliser des réactifs organiques tels que les acides citrique et oxalique.

A titre de réactifs basiques, on peut citer NaOH, KOH et leurs mélanges, auxquels on peut ajouter par exemple des oxydants tels que $H_2O_2$ ou $MnO_4K$.

Lorsqu'il s'agit de réactifs acides, leur concentration dans la phase liquide peut aller par exemple jusqu'à 10mol/l. Lorsque le réactif de décontamination est une base, sa concentration peut aller par exemple jusqu'à 5mol/l.

Lorsque l'on utilise un réactif acide constitue par $H_2SO_4$ à une concentration supérieure à 3mol/l, on ajoute de préférence à la phase liquide un réactif viscosant tel que le polyéthylène glycol, par exemple du polyéthylène glycol de masse moléculaire moyenne 6000 (PEG 6000).

En effet, l'acide sulfurique accélère le phénomène de drainage, mais celui-ci peut être ralenti au moyen de ce réactif viscosant.

Généralement, la concentration en réactif viscosant de la phase liquide ne dépasse pas 1% en poids.

La phase liquide de la mousse comprend aussi au moins deux agents tensioactifs favorisant la formation de la mousse.

Selon l'invention, on utilise deux agents tensioactifs constitués respectivement par une bétaïne, en particulier une sulfo bétaïne, et par un éther alkylique d'oligosaccharide.

L'association de ces deux agents tensioactifs est intéressante car elle reste tensioactive quel que soit le pH et convient donc aussi bien en milieu acide qu'en milieu basique, c'est-à-dire avec les réactifs de décontamination acides ou basiques.

Généralement, la concentration en bétaïne est de 0,2 à 0,4% en poids et la concentration en éther alkylique d'oligosaccharide est de 0,3 à 0,5% en poids.

A titre d'exemple de bétaïnes utilisables, on peut citer celles répondant à la formule suivante :

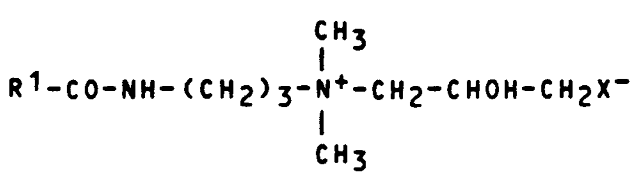

dans laquelle $R^1$ représente un radical alkyle et $X^-$ représente $COO^-$ ou $SO_3^-$.

On peut en particulier utiliser une sulfo-bétaïne telle que celle vendue par la Société Seppic sous le nom commercial Amonyl®.

A titre d'exemple d'éthers alkyliques d'oligosaccharides utilisables comme deuxième tensioactif, on peut citer celui répondant à la formule :

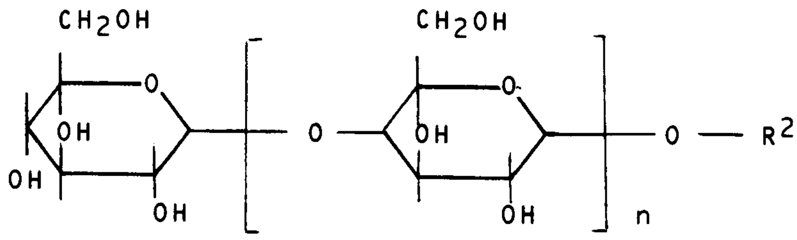

dans laquelle n est un entier de 1 à 5 et $R^2$ est un radical alkyle, de préférence en $C_8$ à $C_{10}$.

A titre d'exemple d'éthers répondant à cette formule, on peut citer celui vendu par la société Seppic sous le nom commercial Oramix CG 110® et celui vendu par la société Rohm et Hass sous le nom Triton CG60®.

Les gaz utilisables pour former la phase gazeuse de la mousse peuvent être constitués par de l'air, de l'azote ou un gaz neutre tel que l'argon.

Généralement, le gaz représente de 80 à 98% en volume de la mousse, dans les conditions normales de température et de pression.

Dans la mousse de l'invention, comme on l'a vu précédemment, les teneurs en agents tensioactifs et en agents déstabilisants sont choisies en fonction de la durée de vie que l'on veut obtenir ; les teneurs en réactif de décontamination sont choisies en fonction de la nature des objets à décontaminer ainsi que du type et du degré de contamination.

A titre d'exemple, la phase liquide d'une mousse de décontamination ou de rinçage peut être constituée par une solution aqueuse comprenant :

- 0,05 à 10mol/l d'un réactif de décontamination,
- 0,2 à 0,4% en poids de bétaïne,
- 0,3 à 0,5% en poids d'éther alkylique d'oligosaccharide, et
- 0,2 à 1% en poids d'agent de déstabilisation.

Dans un autre exemple de mousse de décontamination la phase liquide est constituée par une solution aqueuse comprenant :

- 3 à 6mol/l d'acide sulfurique,
- 0,1 à 1% en poids d'un réactif viscosant,
- 0,2 à 0,4% en poids de bétaïne,
- 0,3 à 0,5% en poids d'un éther alkylique d'oligosaccharide, et
- 0,2 à 1% en poids d'un agent de déstabilisation.

Pour préparer les mousses de l'invention, on utilise des techniques classiques, par exemple un générateur de mousse dans lequel. on fait passer du gaz sous pression dans un diffuseur mis au sein de la solution introduite dans le générateur, la dimension des bulles de gaz étant fonction du débit de gaz et de sa répartition à travers les pores de la plaque frittée constituant le diffuseur et surtout de la perte de charge provoquée par le garnissage poreux.

Avec un tel générateur de mousse, on règle la teneur en gaz de la mousse en choisissant de façon appropriée les débits et les pressions d'introduction de la phase liquide et de la phase gazeuse dans le générateur.

Les mousses de l'invention peuvent être utilisées en particulier pour la décontamination d'objets dans une installation comprenant :

- une enceinte ce décontamination apte à contenir ou constituant l'objet à décontaminer,
- un réservoir de la solution de décontamination formant la phase liquide de la mousse,
- un générateur de mousse,
- des moyens pour introduire dans le générateur de mousse la solution de décontamination présente dans le réservoir de solution,
- des moyens pour introduire un gaz sous pression dans le générateur de mousse,
- des moyens pour introduire la mousse produite par le générateur de mousse dans l'enceinte,

- des moyens pour recycler la phase liquide de la mousse de l'enceinte de décontamination dans le réservoir de solution, et
- des moyens pour recycler dans le générateur de mousse le gaz séparé de la mousse provenant de l'enceinte et du réservoir de solution.

Dans cette installation, on réalise généralement la décontamination à la pression et à la température ambiantes, mais on peut aussi opérer à des températures supérieures, par exemple à 40 °C, 60 °C et même 80 °C, si l'installation le permet.

D'autres caractéristiques et avantages de l'invention apparaitront mieux à la lecture de la description qui suit donnée bien entendu à titre illustratif et non limitatif.

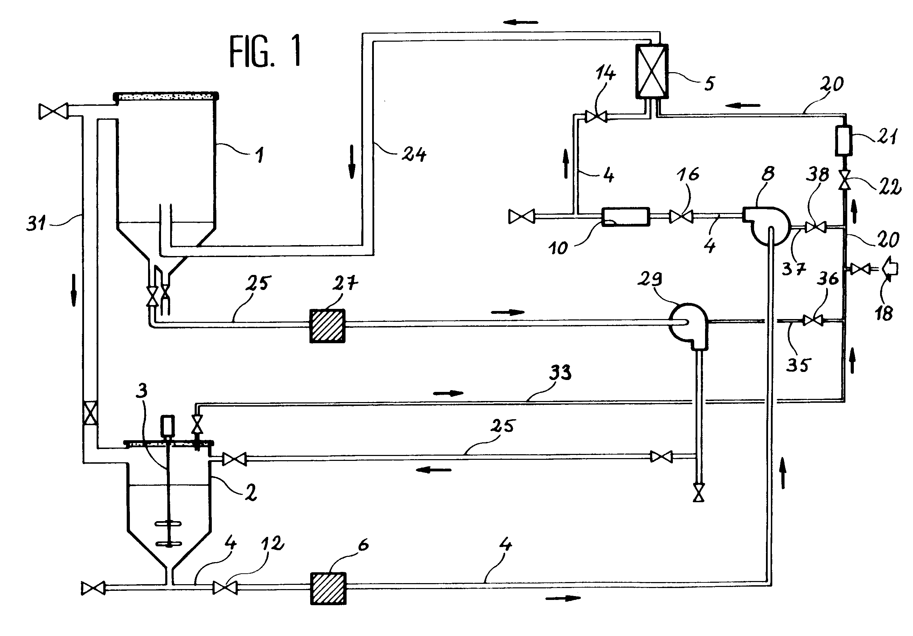

La figure unique annexée représente une installation de décontamination conforme à l'invention.

Sur cette figure on voit que l'installation comprend une enceinte de décontamination 1 qui peut contenir ou constituer l'objet à décontaminer par exemple une cuve, une citerne ou un réacteur, un réservoir de solution de décontamination 2 équipé d'un agitateur 3 et un générateur de mousse 5.

Le générateur de mousse 5 peut être alimenté en phase liquide, c'est-à-dire en solution de décontamination provenant du réservoir 2 par une canalisation 4 munie d'un filtre 6, d'une pompe de circulation 8, d'un débitmètre 10 de vannes d'arrêt 12 et 14 et d'une vanne de réglage de débit 16.

Le générateur de mousse peut être alimenté en phase gazeuse à partir d'une source de gaz sous pression 18 par l'intermédiaire de la conduite 20 munie du débitmètre 21 et d'une vanne de réglage de débit 22. On peut disposer un manomètre entre l'entrée et la sortie du générateur de mousse.

La mousse produite dans le générateur de mousse 5 peut être introduite dans l'enceinte de décontamination 1 par la conduite 24.

Dans l'enceinte de décontamination 1, la mousse est en contact avec la surface des objets à décontaminer, et elle est détruite au bout de 15 à 30min en formant un film liquide qui s'écoule au fond de l'enceinte 1 et qui est évacuée par la conduite 25 munie du filtre 27 et d'une pompe de recyclage 29 dans le réservoir de solution 2.

La mousse peut aussi être recyclée dans le réservoir de solution 2 par la conduite de déversement en trop-plein 31. La phase gazeuse séparée dans le réservoir 2 est recyclée par la conduite 33 dans la conduite 20 d'alimentation en gaz du générateur de mousse 5.

L'installation comprend aussi des conduites de gaz 35 et 37 équipées de vannes d'arrêt 36 et 38 pour relier la source de gaz sous pression 18 respectivement à la conduite 25 de recyclage de la solution et à la canalisation 4 d'alimentation du générateur de mousse, permettant en fin de cycle de réaliser une vidange plus rapide et plus aisée de l'installation.

Cette installation comprend de plus des moyens non représentés sur le dessin pour introduire dans le réservoir de solution 2 les réactifs (décontaminants, tensioactifs, déstabilisants) entrant dans la composition de la phase liquide de la mousse et pour maintenir les concentrations de ces réactifs aux valeurs appropriées pendant toute la durée d'une opération de décontamination.

Les exemples suivants illustrent la préparation et l'utilisation de mousses conformes à l'invention.

**Exemple 1** : Préparation de la mousse n° 1.

Dans cet exemple, on prépare une mousse dans laquelle la phase liquide est constituée par une solution aqueuse contenant :

- 4mol/l de NaOH
- 0,4% en poids d'agent tensioactif Triton® CG60
- 0,3% en poids d'agent tensioactif Amonyl®, et
- 0,4% en poids de pentanol-2.

Pour préparer la mousse, on introduit 156l/h de cette solution dans le générateur de mousse 5 et de l'air dans ce même générateur à un débit de $2m^3/h$ (mesuré dans les conditions normales de pression et température CNPT), sous une pression de 0,2MPa. On obtient ainsi $1m^3/h$ de mousse qui présente les caractéristiques suivantes :

- taux d'humidité : 5 à 20%.
- durée de vie : 20 min.

**Exemple 2** : Préparation de la mousse n° 2.

Dans cet exemple, on prépare la mousse comme dans l'exemple 1 mais on utilise une solution aqueuse contenant

- 3mol/l de $H_2SO_4$,

- 3mol/l de $H_3PO_4$,
- 0,5% en poids de PEG 6000,
- 0,2% en poids d'Amonyl,
- 0,4% en poids de Triton, et
- 0,6% en poids de pentanol-2,

et on alimente le générateur de mousse avec un débit de solution de 100l/h en solution et un débit d'air de 2m$^3$/h (conditions normales de température et de pression), sous une pression de 0,2MPa. On obtient ainsi 1m$^3$/h de mousse ayant les caractéristiques suivantes :

- le taux d'humidité : 10 à 8,3%,
- durée de vie : 20min environ.

**Exemple 3** : Préparation de la mousse n° 3.

Dans cet exemple, on prépare la mousse comme dans l'exemple 1, mais on utilise une solution aqueuse contenant

- 3mol/l de $H_2SO_4$,
- 3mol/l de $H_3PO_4$,
- 0,02mol/l de Ce (IV),
- 0,5% en poids de PEG 6000,
- 0,2% en poids d'Amonyl,
- 0,4% en poids de Triton CG60, et
- 0,6% en poids de pentanol-2,

et on alimente le générateur de mousse avec un débit de solution de 100l/h et un débit d'air de 2m$^3$/h (conditions normales de température et de pression), sous une pression de 0,2MPa. On obtient 1m$^3$/h de mousse.

Le taux d'humidité de la mousse est d'environ 10%.

Sa durée de vie est de 20min.

**Exemple 4** : Préparation de la mousse n° 4.

Dans cet exemple, on prépare une mousse à partir d'une solution aqueuse contenant :

- 2mol/l $H_2SO_4$
- 0,9% en poids de Triton®,
- 0,225% en poids d'AMONYL®, et
- 0,5% en poids de méthyl-4 pentanol-2.

On alimente le générateur de mousse avec un débit de solution de 138l/h et un débit d'air de 1,8m$^3$/h, (conditions normales de température et de pression) sous une pression de 0,2MPa.

On obtient ainsi 1,4m$^3$/h de mousse ayant les caractéristiques suivantes :

- taux d'humidité : 7%
- durée de vie : 19min.

Dans le tableau 1 annexé, on a regroupé les compositions des mousses des exemples 1 à 4.

**Exemples 5 à 8.**

Dans ces exemples, on soumet divers objets contaminés à plusieurs traitements réalisés aux moyens des mousses des exemples 1, 2 et/ou 3 en effectuant chaque traitement dans l'installation de l'invention pendant 2h.

On mesure l'activité radioactive des objets avant et après les traitements ainsi que leur érosion moyenne et on détermine leur facteur de décontamination FD qui correspond à la formule suivante :

$$FD = \frac{\text{Activité initiale}}{\text{Activité finale}}$$

Les traitements appliqués avec chaque mousse ont une durée de 2h comme dans les exemples 1 à 3.

Les résultats obtenus sont donnés dans le tableau 2 annexé.

Au vu de ces résultats, on constate que les mousses de l'invention sont très efficaces pour des durées de traitement relativement faibles.

**TABLEAU 1**

| Phase liquide | | mousse n°1 | mousse n°2 | mousse n°3 | mousse n° 4 |
|---|---|---|---|---|---|
| Réactif de décontamination | NaOH (mol/l) | 4 | - | - | - |
| | $H_2SO_4$ (mol/l) | - | 3 | 3 | 2 |
| | $H_3PO_4$ (mol/l) | - | 3 | 3 | - |
| | $Ce^{IV}$ (mol/l) | - | - | 0,02 | - |
| Tensioactif | Amonyl® (% en poids) | 0,3 | 0,2 | 0,2 | 0,225 |
| | Triton® (% en poids) | 0,4 | 0,4 | 0,4 | 0,9 |
| Agent viscosant | PEG® 6000 (% en poids) | - | 0,5 | 0,5 | - |
| Agent de déstabilisation | Pentanol-2 (%en poids) | 0,4 | 0,6 | 0,6 | |
| | méthyl-4-pentanol-2 | - | - | - | 0,5 |
| Débit liquide | (l/h) | 156 | 100 | 100 | 138 |
| phase gazeuse air débit ($m^3/h$) - pression 0,2 MPa | | 2 | 2 | 2 | 1,8 |
| Taux d'humidité (%) | | 5 - 20 | 8,3 - 10 | 10 | 7 |
| Durée de vie (min) | | 20 | 20 | 20 | 19 |

**TABLEAU 2**

| | Ex.5 | Ex.6 | Ex.7 | Ex.8 |
|---|---|---|---|---|
| | Objet n°1 | Objet n°2 | Objet n°3 | Objet n°4 |
| Traitement appliqué | mousse n° 1 - 2h<br>mousse n° 2 - 2h | mousse n° 1 - 2h<br>mousse n° 3 - 2h | mousse n° 1 - 2h<br>mousse n° 2 - 2h | mousse n° 1 - 2h<br>mousse n° 3 - 2h |
| Activité initiale moyenne ($Bq.cm^{-2}$) | 134 | 146 | 165 | 4400$Bq.cm^{-2}$ |
| Activité résiduelle moyenne ($Bq.cm^{-2}$) | 0,35 | 0,2 | 1,9 | < 5$Bq.cm^{-2}$ |
| F.D. (Facteur de décontamination) | 380 | 730 | 86 | > 880 |
| Erosion moyenne (µm) (oxyde + métal) par le fer dissous | 26µm | 29µm | - | 6,9µm |

## Revendications

1. Mousse de décontamination, caractérisée en ce qu'elle comprend
   a) une phase liquide constituée par une solution d'au moins deux agents tensioactifs non ioniques et/ou amphotères, constitués respectivement par une bétaïne et par un éther alkylique d'oligosaccharide, d'au moins un agent de déstabilisation d'une émulsion gaz-liquide constitué par un alcool ayant un point d'ébullition légèrement supérieur à celui de l'eau et d'au moins un réactif de décontamination constitué par un acide ou une base inorganique ou organique, et
   b) une phase gazeuse dispersée dans la phase liquide.

2. Mousse selon la revendication 1, caractérisée en ce que l'agent de déstabilisation de la mousse est un alcool secondaire en $C_5$ ou $C_6$.

3. Mousse selon la revendication 2, caractérisée en ce que l'alcool est le pentanol-2 ou le méthyl-4 pentanol-2.

4. Mousse selon l'une quelconque des revendications 1 à 3 caractérisée en ce que la bétaïne répond à la formule

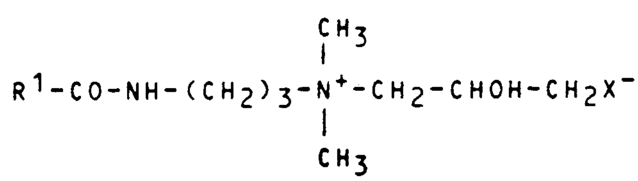

dans laquelle $R^1$ représente un radical alkyle et $X^-$ représente $COO^-$ ou $SO_3^-$.

5. Mousse selon l'une quelconque des revendications 1 à 4 caractérisée en ce que l'éther alkylique d'oligosaccharide répond à la formule :

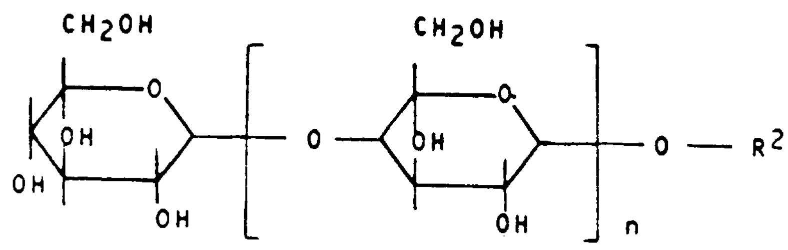

dans laquelle n est un entier de 1 à 5 et $R^2$ est un radical alkyle.

6. Mousse selon l'une quelconque des revendications 1 à 5, caractérisée en ce que le réactif de décontamination est constitué par au moins un acide choisi parmi HCl, $HNO_3$, $H_2SO_4$ et $H_3PO_4$.

7. Mousse selon la revendication 6, caractérisée en ce que le réactif de décontamination comprend de l'acide sulfurique et en ce que la phase liquide comprend de plus un réactif viscosant.

8. Mousse selon la revendication 7, caractérisée en ce que le réactif viscosant est un polyéthylène glycol.

9. Mousse selon l'une quelconque des revendications 1 à 5, caractérisée en ce que le réactif de décontamination est une base choisie parmi NaOH, KOH et leur mélanges.

10. Mousse selon la revendication 1, caractérisée en ce que la phase liquide est constituée par une solution aqueuse comprenant :
    - 0,05 à 10mol/l du réactif de décontamination,

- 0,2 à 0,4% en poids de bétaïne,
- 0,3 à 0,5% en poids d'éther alkylique d'oligosaccharide, et
- 0,2 à 1% en poids d'agent de déstabilisation.

**11.** Mousse selon la revendication 1, caractérisée en ce que la phase liquide est constituée par une solution aqueuse comprenant
- 3 à 6mol/l d'acide sulfurique,
- 0,1 à 1% en poids d'un réactif viscosant,
- 0,2 à 0,4% en poids de bétaïne,
- 0,3 à 0,5% en poids d'un éther alkylique d'oligosaccharide, et
- 0,2 à 1% en poids d'agent de déstabilisation.

**12.** Mousse selon la revendication 1, caractérisée en ce que la phase liquide est une solution aqueuse comprenant
- 4mol/l de NaOH
- 0,3% en poids de bétaïne
- 0,4% en poids d'éther alkylique d'oligosaccharide, et
- 0,4% en poids de pentanol-2.

**13.** Mousse selon la revendication 1, caractérisée en ce que la phase liquide est une solution aqueuse comprenant
- 3mol/l de $H_2SO_4$
- 3mol/l de $H_3PO_4$
- 0,5% en poids de polyéthylène glycol,
- 0,2% en poids de bétaïne,
- 0,4% en poids d'éther alkylique d'oligosaccharide, et
- 0,6% en poids de pentanol-2.

**14.** Mousse selon la revendication 1, caractérisée en ce que la phase liquide est une solution aqueuse comprenant
- 3mol/l de $H_2SO_4$,
- 3mol/l de $H_3PO_4$,
- 0,02mol/l de $Ce^{IV}$,
- 0,5% en poids de polyéthylène glycol,
- 0,2% en poids de bétaïne,
- 0,4% en poids d'éther alkylique d'oligosaccharide, et
- 0,6% en poids de pentanol-2.

## Claims

**1.** Decontaminating foam characterized in that it includes

a) a liquid phase consisting of a solution of at least two nonionic and/or amphoteric surface-active agents consisting, respectively, of a betaine and of an oligosaccharide alkyl ether, of at least one agent for destabilizing a gas-liquid emulsion, consisting of an alcohol which has a boiling point slightly higher than that of water and of at least one decontaminating reactant consisting of an inorganic or organic acid or base, and

b) a gaseous phase dispersed in the liquid phase.

**2.** Foam according to Claim 1, characterized in that the foam-destabilizing agent is a $C_5$ or $C_6$ secondary alcohol.

**3.** Foam according to Claim 2, characterized in that the alcohol is 2-pentanol or 4-methyl-2-pentanol.

**4.** Foam according to any one of Claims 1 to 3, characterized in that the betaine corresponds to the formula

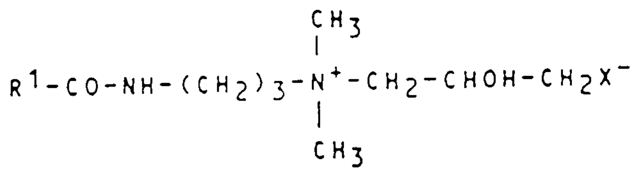

in which $R^1$ denotes an alkyl radical and $X^-$ denotes $COO^-$ or $SO_3^-$.

**5.** Foam according to any one of Claims 1 to 4, characterized in that the oligosaccharide alkyl ether corresponds to the formula:

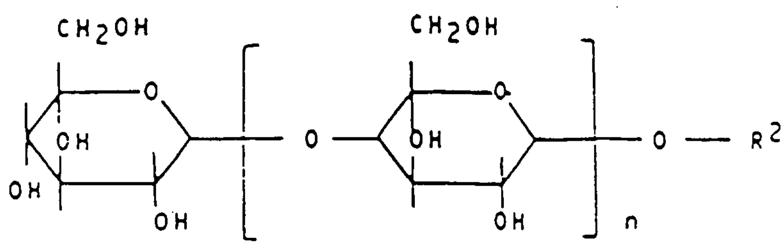

in which n is an integer from 1 to 5 and $R^2$ is an alkyl radical.

**6.** Foam according to any one of Claims 1 to 5, characterized in that the decontaminating reactant consists of at least one acid chosen from HCl, $HNO_3$, $H_2SO_4$ and $H_3PO_4$.

**7.** Foam according to Claim 6, characterized in that the decontaminating reactant includes sulphuric acid and in that the liquid phase additionally includes a reactant imparting viscosity.

**8.** Foam according to Claim 7, characterized in that the reactant imparting viscosity is a polyethylene glycol.

**9.** Foam according to any one of Claims 1 to 5, characterized in that the decontaminating reactant is a base chosen from NaOH, KOH and their mixtures.

**10.** Foam according to Claim 1, characterized in that the liquid phase consists of an aqueous solution including:

- 0.05 to 10 mol/l of the decontaminating reactant,
- 0.2 to 0.4 % by weight of betaine,
- 0.3 to 0.5 % by weight of oligosaccharide alkyl ether, and
- 0.2 to 1 % by weight of destabilizing agent.

**11.** Foam according to Claim 1, characterized in that the liquid phase consists of an aqueous solution including

- 3 to 6 mol/l of sulphuric acid,
- 0.1 to 1 % by weight of a reactant imparting viscosity.
- 0.2 to 0.4 % by weight of betaine,
- 0.3 to 0.5 % by weight of an oligosaccharide alkyl ether, and
- 0.2 to 1 % by weight of destabilizing agent.

**12.** Foam according to Claim 1, characterized in that the liquid phase is an aqueous solution including

- 4 mol/l of NaOH
- 0.3 % by weight of betaine
- 0.4 % by weight of oligosaccharide alkyl ether, and
- 0.4 % by weight of 2-pentanol.

**13.** Foam according to Claim 1, characterized in that the liquid phase is an aqueous solution including
- 3 mol/l of $H_2SO_4$
- 3 mol/l of $H_3PO_4$
- 0.5 % by weight of polyethylene glycol,
- 0.2 % by weight of betaine,
- 0.4 % by weight of oligosaccharide alkyl ether, and
- 0.6 % by weight of 2-pentanol.

**14.** Foam according to Claim 1, characterized in that the liquid phase is an aqueous solution including
- 3 mol/l of $H_2SO_4$,
- 3 mol/l of $H_3PO_4$,
- 0.2 mol/l of $Ce^{IV}$,
- 0.5 % by weight of polyethylene glycol,
- 0.2 % by weight of betaine,
- 0.4 % by weight of oligosaccharide alkyl ether, and
- 0.6 % by weight of 2-pentanol.

**Patentansprüche**

**1.** Schaum zur Dekontamination, dadurch gekennzeichnet, daß er

a) eine flüssige Phase, bestehend aus einer Lösung mindestens zweier nichtionischer und/oder amphoterer grenzflächenaktiver Agenzien, die aus einem Betain bzw. einem Oligosaccharid-Alkylether bestehen, mindestens eines Destabilisierungsagens für eine Gas-Flüssigkeits-Emulsion, das aus einem Alkohol besteht, der einen geringfügig höheren Siedepunkt als Wasser hat, und mindestens eines Dekontaminationsreagens, das aus einer anorganischen oder organischen Säure oder Base besteht, und

b) eine gasförmige Phase, die in der flüssigen Phase dispergiert ist, umfaßt.

**2.** Schaum nach Anspruch 1, dadurch gekennzeichnet, daß das Destabilisierungsagens für den Schaum ein sekundärer Alkohol mit 5 oder 6 Kohlenstoffatomen ist.

**3.** Schaum nach Anspruch 2, dadurch gekennzeichnet, daß der Alkohol Pentanol-2 oder 4-Methylpentanol-2 ist.

**4.** Schaum nach einem der Ansprüche 1 bis 3, dadurch gekennzeichnet, daß das Betain der Formel

$$\begin{array}{c} \qquad\qquad\qquad\quad CH_3 \\ \qquad\qquad\qquad\quad | \\ R^1-CO-NH-(CH_2)_3-N^+-CH_2-CHOH-CH_2X^- \\ \qquad\qquad\qquad\quad | \\ \qquad\qquad\qquad\quad CH_3 \end{array}$$

entspricht, worin $R^1$ einen Alkylrest bedeutet und $X^-$ für $COO^-$ oder $SO_3^-$ steht.

**5.** Schaum nach einem der Ansprüche 1 bis 4, dadurch gekennzeichnet, daß der Oligosaccharid-Alkylether der Formel

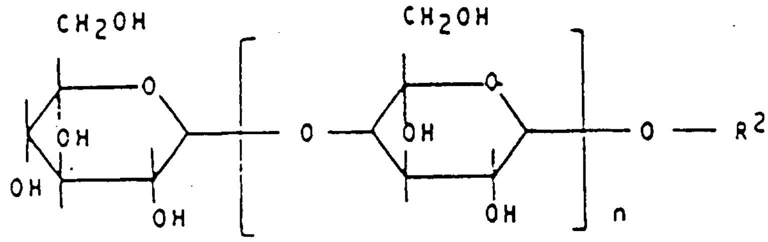

entspricht, worin n eine ganze Zahl von 1 bis 5 ist und $R^2$ ein Alkylrest ist.

6. Schaum nach einem der Ansprüche 1 bis 5, dadurch gekennzeichnet, daß das Dekontaminationsreagens aus mindestens einer unter HCl, $HNO_3$, $H_2SO_4$ und $H_3PO_4$ gewählten Säure besteht.

7. Schaum nach Anspruch 6, dadurch gekennzeichnet, daß das Dekontaminationsreagens Schwefelsäure enthält und daß die flüssige Phase ferner ein viskos machendes Reagens enthält.

8. Schaum nach Anspruch 7, dadurch gekennzeichnet, daß das viskos machende Reagens ein Polyethylenglykol ist.

9. Schaum nach einem der Ansprüche 1 bis 5, dadurch gekennzeichnet, daß das Dekontaminationsreagens eine unter NaOH, KOH und ihren Mischungen gewählte Base ist.

10. Schaum nach Anspruch 1, dadurch gekennzeichnet, daß die flüssige Phase aus einer wäßrigen Lösung besteht, die
   - 0,05 bis 10 mol/l Dekontaminationsreagens,
   - 0,2 bis 4 Gew.-% Betain,
   - 0,3 bis 0,5 Gew.-% Oligosaccharid-Alkylether und
   - 0,2 bis 1 Gew.-% Destabilisierungsagens enthält.

11. Schaum nach Anspruch 1, dadurch gekennzeichnet, daß die flüssige Phase aus einer wäßrigen Lösung besteht, die
   - 3 bis 6 mol/l Schwefelsäure,
   - 0,1 bis 1 Gew.-% eines viskos machenden Reagens,
   - 0,2 bis 0,4 Gew.-% Betain,
   - 0,3 bis 0,5 Gew.-% Oligosaccharid-Alkylether und
   - 0,2 bis 1 Gew.-% Destabilisierungsagens enthält.

12. Schaum nach Anspruch 1, dadurch gekennzeichnet, daß die flüssige Phase eine wäßrige Lösung ist, die
   - 4 mol/l NaOH,
   - 0,3 Gew.-% Betain,
   - 0,4 Gew.-% Oligosaccharid-Alkylether und
   - 0,4 Gew.-% Pentanol-2 enthält.

13. Schaum nach Anspruch 1, dadurch gekennzeichnet, daß die flüssige Phase eine wäßrige Lösung ist, die
   - 3 mol/l $H_2SO_4$,
   - 3 mol/l $H_3PO_4$,
   - 0,5 Gew.-% Polyethylenglykol,
   - 0,2 Gew.-% Betain,
   - 0,4 Gew.-% Oligosaccharid-Alkylether und
   - 0,6 Gew.-% Pentanol-2 enthält.

14. Schaum nach Anspruch 1, dadurch gekennzeichnet, daß die flüssige Phase eine wäßrige Lösung ist, die
   - 3 mol/l $H_2SO_4$,

- 3 mol/l $H_3PO_4$,
- 0,02 mol/l $Ce^{IV}$,
- 0,5 Gew.-% Polyethylenglykol,
- 0,2 Gew.-% Betain,
- 0,4 Gew.-% Oligosaccharid-Alkylether und
- 0,6 Gew.-% Pentanol-2 enthält.

FIG. 1